# EUROPEAN PATENT SPECIFICATION

(11) **EP 2 731 309 B1**
(45) Date of publication and mention of the grant of the patent: **11.04.2018**
(21) Application number: 12306395.0
(22) Date of filing: 12.11.2012
(51) Int. Cl.: H04L 29/06, H04W 12/06, H04W 12/04, H04W 8/20

(54) **SECURED AUTHENTICATION FOR COMMUNITY SERVICES**
GESICHERTE AUTHENTIFIZIERUNG FÜR GEMEINSCHAFTSDIENSTE
AUTHENTIFICATION SÉCURISÉE POUR DES SERVICES COMMUNAUTAIRES

(43) Date of publication of application: 14.05.2014
(73) Proprietor: ALCATEL LUCENT, 92100 Boulogne-Billancourt (FR)
(72) Inventor: Taburet, François, 91620 Nozay (FR); El Mghazli, Yacine, 91620 Nozay (FR)
(74) Representative: Mouney, Jérôme

(56) References cited:
- EP-A2- 2 337 307
- US-A1- 2009 205 028

## Description

### FIELD OF THE INVENTION

The present invention relates to a secured authentication for community services, for example for a server hosting a website for a social network.

### BACKGROUND

Social networks are on-line service, platforms or site that focuses on facilitating the building of social relations among people who, for example, share interest, activities, backgrounds or real-life connections. Most social networks services today are web-based and provide means for users to interact over the Internet, such as email or instant messaging. But social networks offer also online community services that enable group-centered services that allow users to share ideas, activities, events and interests with their peers.

There is a need to provide users that belong to such a community a strong level of security in terms of privacy and authenticity.

The document EP 2 337 307, 22nd June 2011 (2011/06/22) describes a system that provides a secure platform-based subscriber identity module service without requiring a physical SIM card.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for enabling a secured authentication between a communication device that is coupled with a smart card of a user being a subscriber of a telecommunication network and an application server that provides a service dedicated to a set of users and is connected to the telecommunication network, the method comprising the following steps in a personalization server included in the telecommunication network:
receiving a first request from the application server, the first request containing an identifier of said service,
generating an authentication key and an international identity that are stored in correspondence with the identifier of said service,
sending a first response to the application server, the first response containing the generated authentication key and international identity,
receiving a second request from the application server, the request containing an identifier of the smart card and the identifier of said service,
retrieving the authentication key and the international identity stored in correspondence with the identifier of said service,
sending a message to the communication device, the message containing the authentication key, the international identity, an admin code, the identifier of said service, and a personalization command, in order that the smart card interprets the personalization command to store the authentication key, the international identity and the identifier of said service if the admin code is valid.

The invention advantageously provides a new generation of smart card which allows remote reconfiguration from an Over The Air server. The operator can leverage on its position to act as trusted third party between the user and a given website or service and sell the action to configure a dedicated profile on the smart card, on behalf of the website.

The invention advantageously allows a more secure model for social network services, and places the telecommunication network operator responsible of securing the social network access.

In an embodiment, the application server is able to authenticate the communication device by means of a protocol using the authentication key and the international identity.

In an embodiment, the personalization server identifies the communication device by means of the identifier of the smart card.

In an embodiment, the identifier of the smart card is a call number.

In an embodiment, the personalization server retrieves the admin code that was initially stored in a database in correspondence with an identifier of the smart card corresponding to the identifier of the smart card comprised in the received second request.

In an embodiment, an application in the smart card checks if the admin code received in the message is compatible with the admin code initially stored in the smart card in order to determine if the admin code is valid.

In an embodiment, the message is an encrypted short message and is decomposed in several messages.

In an embodiment, the message contains data packets sent to the smart card through a service node and a gateway node of the telecommunication network via a secured session.

In an embodiment, the second request further contains a user identifier that identifies the user within the set of users, the personalization server generates a profile identifier corresponding to the user identifier, and sends a second response containing the profile identifier to the application server, and wherein the message further contains the profile identifier.

A further object of the invention is a method for enabling a secured authentication between a communication device that is coupled with a smart card of a user being a subscriber of a telecommunication network and an application server that provides a service dedicated to a set of users and is connected to the telecommunication network, the method comprising the following steps in the application server:
sending a first request to the personalization server, the first request containing an identifier of said service,
receiving a first response sent from the personalization server, the first response containing an authentication key and an international identity, the personalization server having generated the authentication key and the international identity that are stored in correspondence with the identifier of said service,
sending a second request to the personalization server, the request containing an identifier of the smart card and the identifier of said service, in order that the personalization server retrieves the authentication key and the international identity stored in correspondence with the identifier of said service, and that the personalization server sends a message to the communication device, the message containing the authentication key, the international identity, an admin code, the identifier of said service, and a personalization command, in order that the smart card interprets the personalization command to store the authentication key, the international identity and the identifier of said service if the admin code is valid.

A further object of the invention is a personalization server for enabling a secured authentication between a communication device that is coupled with a smart card of a user being a subscriber of a telecommunication network and an application server that provides a service dedicated to a set of users and is connected to the telecommunication network, the personalization server being included in the telecommunication network and comprising:
means for receiving a first request from the application server, the first request containing an identifier of said service,
means for generating an authentication key and an international identity that are stored in correspondence with the identifier of said service,
means for sending a first response to the application server, the first response containing the generated authentication key and international identity,
means for receiving a second request from the application server, the request containing an identifier of the smart card and the identifier of said service,
means for retrieving the authentication key and the international identity stored in correspondence with the identifier of said service,
means (NI) for sending a message to the communication device, the message containing the authentication key, the international identity, an admin code, the identifier of said service, and a personalization command, in order that the smart card interprets the personalization command to store the authentication key, the international identity and the identifier of said service if the admin code is valid.

A further object of the invention is an application server for enabling a secured authentication between a communication device that is coupled with a smart card of a user being a subscriber of a telecommunication network and the application server that provides a service dedicated to a set of users and is connected to the telecommunication network, the application server comprising:
means for sending a first request to the personalization server, the first request containing an identifier of said service,
means for receiving a first response sent from the personalization server, the first response containing an authentication key and an international identity, the personalization server having generated the authentication key and the international identity that are stored in correspondence with the identifier of said service,
means for sending a second request to the personalization server, the request containing an identifier of the smart card and the identifier of said service, in order that the personalization server retrieves the authentication key and the international identity stored in correspondence with the identifier of said service, and that the personalization server sends a message to the communication device, the message containing the authentication key, the international identity, an admin code, the identifier of said service, and a personalization command, in order that the smart card interprets the personalization command to store the authentication key, the international identity and the identifier of said service if the admin code is valid.

In an embodiment, the application server is hosting a website providing said service that is dedicated to a set of users defining a community and allows the set of users to exchange data between them.

The invention relates further to computer programs adapted to be executed in servers for enabling a secured authentication between a communication device and an application server, said programs including instructions which, when the program is executed in said servers, execute the steps of the method of the invention performed in the servers.

### BRIEF DESCRIPTION OF THE FIGURES

Some embodiments of the present invention are now described, by way of example only, and with reference to the accompanying drawings, in which:
- FIG. 1 is a schematic block-diagram of a communication system according to an embodiment of the invention,
- FIG. 2 is a flowchart showing steps performed to execute a method for a secured authentication for social network services according to an embodiment of the invention.

The same reference number represents the same element or the same type of element on all drawings.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

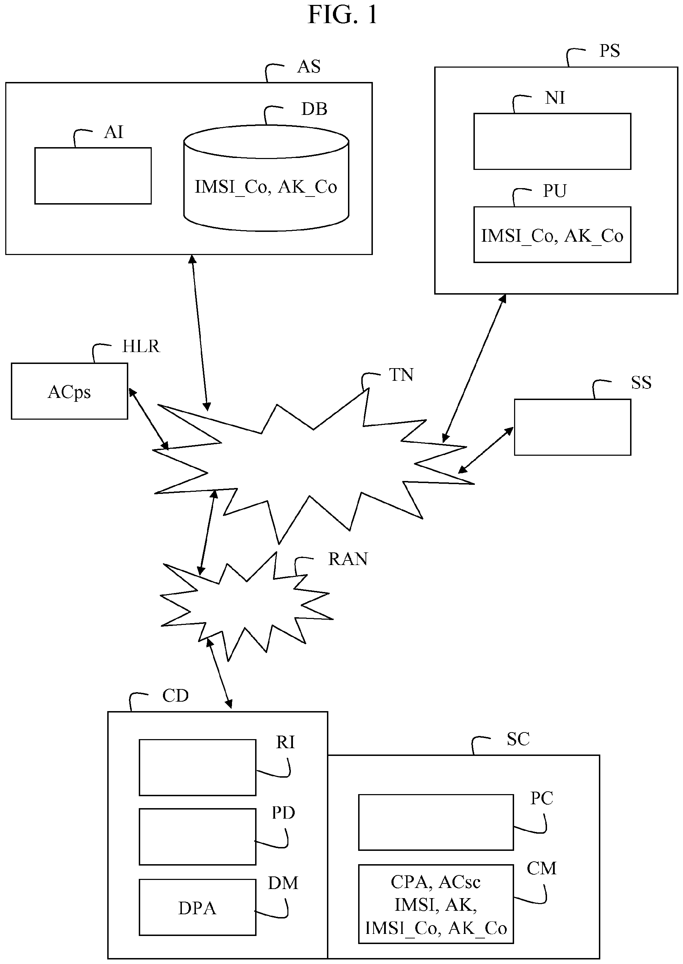

Referring to FIG. 1, a communication system comprises a personalization server PS and at least a communication device CD which are able to communicate between them through a telecommunication network TN, and at least an application server AS included in a packet network connected to the telecommunication network. Optionally, the communication system comprises a security server SS included in a packet network connected to the telecommunication network.

For example, the telecommunication network TN is a digital cellular radio communication network of the GSM (Global System for Mobile communications) or UMTS (Universal Mobile Telecommunications System) or even CDMA (Code Division Multiple Access) type or even LTE (Long Term Evolution) type. The GSM type network may be coupled with a GPRS (General Packet Radio Service) network for the transmission of data by packets with mobility and access management via radio. For example, the telecommunication network is able to authorize a communication device to send and receive data via the network when the communication device is identified at the network, for example by means of a subscriber identification module associated with the communication device.

Figure 1 does not represent known main components of the localization area of the telecommunication network where the communication device is situated. For example in a GSM type network, the localization area comprises an MSC (Mobile service Switching Center) which is connected by means of a BSC (Base Station Controller) to a base station BTS (Base Transceiver Station) connected by means of a radio link to the communication device.

The communication device CD can establish a connection with the telecommunication network TN through a respective radio access network RAN via a radio link with the base station. The radio access networks are distributed over a geographical area typically divided into cells that are served by a corresponding base station. Base stations communicate over an air interface with the user equipment, with several base stations being connected to a radio network controller (RNC) or base station controller (BSC) that is connected to one or more core networks. In the typical situation, secure communications for users of the system may be provided through encryption and decryption at the base station.

The telecommunication network TN comprises a Home Location Register HLR. The register HLR collaborates with an authentication center that manages a respective database containing, in particular, a set of international identities IMSI (International Mobile Subscriber Identity) and a set of authentication keys called AK each associated with a subscription profile for each user of the network.

The radio access network of the telecommunication network is connected to a set of service nodes SGSN and gateway-nodes GGSN (Gateway GPRS Support Node) supporting a packet-switched core network of the telecommunication network and is connected to a switch MSC supporting a circuit-switched core network of the telecommunication network. All of the SGSN and GGSN nodes constitute a gateway connecting the radio access network and the packet core network. According to the invention, the personalization server PS may be directly or indirectly accessible from the gateway node GGSN of the telecommunication network via a packet communication network, for example the Internet, and also from the switch MSC via a Short Message Service Center SMSC.

In order to not encumber the FIG. 1, the mentioned service node SGSN, gateway-node GGSN and Short Message Service Center SMSC of each telecommunication network are not represented.

Generally, telecommunication networks are using a strong authentication method based on a shared secret configured on the network side in the Authentication Center of the HLR or the HSS, and on the terminal side in the Universal Integrated Circuit Card (UICC) containing a SIM (Subscriber Identity Module) application for a GSM network or a USIM (Universal Subscriber Identity Module) in a UMTS network.

This shared secret is an authentication key and the action to configure a generic UICC card, called more generally hereinafter smart card, with a given authentication key is called personalization.

The authentication key is a 128 bit key used in the authentication and cipher key generation process. The authentication key is used to authenticate the smart card on the mobile network. Each smart card contains this authentication key which is assigned to it by the operator during the personalization process.

So Mobile Network Operators (MNOs) are physically personalizing the smart cards in their premises and once for all. Operators then send the personalized smart card to the user, who will insert it in his mobile terminal to access the mobile network of the MNO. The personalization can also be outsourced to the smart card provider, but it is always configured physically and for ever.

It is assumed here that an initial user profile is stored in a register HLR of the telecommunication network TN and in a smart card owned by the user, this initial user profile containing an authentication key and an international identity for authentication between the smart card and the telecommunication network.

The personalization server PS is a server included in the telecommunication network TN and managed by the operator of the telecommunication network TN.

In one variant, the personalization server PS is not managed by the operator of the telecommunication network TN, acting as an independent service entity.

The personalization server PS comprises a network interface NI handling exchange of messages with the smart card SC via the telecommunication network TN, for example via a Short Message Service Center SMSC. The network interface NI can communicate with a register HLR of the telecommunication network TN in order to obtain profile information from it.

The personalization server PS comprises a processing unit PU dedicated to the generation of authentication keys and international identities.

It is assumed that the personalization server PS is able to perform an over-the-air (OTA) mechanism to obtain read/write access to a space memory of smart cards, in collaboration at least with the register HLR and the SMSC server of the telecommunication network TN.

To this end, the network interface NI of the personalization server PS may be assimilated to a Gateway API managing a database that stores in correspondence for each smart card an identifier of the smart card, the smart card manufacturer, the IMSI and the MSISDN (Mobile Subscriber Integrated Services Digital Network-Number). The interface INT has a set of libraries that contain the formats to use for each type of smart card and is able to format messages differently depending on the recipient smart card.

Furthermore, the network interface NI of the personalization server PS manages a database wherein admin codes ACps are stored in correspondence with different identifiers of smart cards or different identifiers of users. An admin code corresponds to a secret shared between the personalization server PS and a smart card SC, and is unique for each smart card SC. It is considered that an admin code allows a command provided through an OTA mechanism to obtain read/write access to the space memory of the smart card SC where the international identity IMSI and the authentication key AK are stored.

The communication device CD can be a radio communication mobile terminal. For example, the communication device CD is a mobile phone, or is a communicating Personal Digital Assistant PDA, or an intelligent telephone like SmartPhone.

In an example, the communication device CD is a cellular mobile radio communication terminal, connected by a channel to a radio access network of the telecommunication network TN, e.g. GSM (Global System for Mobile communications) or UMTS (Universal Mobile Telecommunications System) or LTE (Long Term Evolution).

In other examples, the communication device CD can be replaced by any device which is equipped with a smart card reader and can communicate with the smart card.

The communication device CD is associated with a smart card SC, for example included in the communication device CD.

The communication device CD comprises a radio interface RI, a processor PD, device memories MD and a smart card reader. The memories MD comprise various memories such as ROM memory, nonvolatile memory EEPROM or Flash, and RAM memory.

The radio interface RI transposes in frequency, converts digitally, demodulates and decodes messages received via the telecommunication network TN, and inversely transmits messages.

The device memories MD comprise the operating system of the communication device CD and an execution environment such as a Java virtual machine JVMT programmed in Java, for example J2ME.

In particular, in the nonvolatile memory of device memories MD are implemented device applications, originally written in a high level language of type object-oriented such as language Java compatible with virtual machine JVMT. The virtual machine JVMT can communicate with a virtual machine JVMC installed in the smart card SC via a predetermined communication protocol, like protocol APDU.

In order that device applications respectively communicate with card applications implemented in the smart card SC in accordance with predetermined communication protocol, an access interface to access resources and data in the smart card is implemented in the device memories DM for example under the form of a Java API (Application Programming Interface).

Device memories DM further include a communication interface, for example the SIM Toolkit engine, so that a main application SIM or USIM or any other application in the smart card communicates with the "outside world" via the communication device, for example with an application server. The communication interface manages commands and responses exchanged between the "outside world" and the main application SIM or USIM, for example by adapting them to short messages exchanged with a short message server.

The smart card SC, also known as microcontroller card or integrated circuit card, is a user identity module of UICC type associated with the communication device.

In one embodiment, a microcontroller in the smart card SC mainly comprises one or more processors PC, and card memories CM. The smart card exchange commands, or requests, and replies with the communication device CD via an input/output port of the smart card reader of the communication device CD with or without contact. The various components of the smart card may be interconnected by a bidirectional bus.

Card memories CM comprise memory of type Flash or ROM including codes and data for example of an operating system and a virtual machine JVMC compliant with the Java Card specification, or any other operating system.

Card memories CM comprise also memory of type Flash or EEPROM for storing for example identity numbers and other parameters of the profile of the user possessing the card, such as a PIN code, an international identity, an authentication key, an identifier of the smart card, an admin code ACsc, and other security data. It is considered that the communication device CD is owned by a user who is a subscriber of the telecommunication network TN, so card memories CM contains an admin code ACsc for accessing or modifying the smart card, and contains also an international identity IMSI and an authentication key AK, used to authenticate the user by the telecommunication network TN.

Card memories CM comprise also memory of type RAM serving more particularly to data processing.

Card memories CM comprise also a memory space to store card applications which are proprietary code or applets STK, e.g. SIM ToolKit, and that are installed during the manufacture of the smart card or possibly installed during use of the card at the request of the user or the operator.

In particular, a card personalization application CPA is stored in the card memories CM and has a read/write access especially to the international identity, the authentication key, and the identifier, for example under an OTA command presenting the admin code ACsc. The card personalization application CPA is able to handle commands and messages according to an OTA mechanism and is able to communicate with a corresponding device personalization application DPA stored in the device memories DM of the communication device CD for some functionalities such as an interface with the user, and is also able to communicate with the application server AS for the personalization of the smart card.

The application server AS is a network entity that is able to communicate with the communication device CD and that offers a web service requiring user authentication by communicating with client applications, like web browsers, implemented in communication devices.

Especially, the application server AS contains an authentication interface Al that manages a user authentication process based on security protocol, such as IKEv2/EAP that is an Extensible Authentication Protocol based on the Internet Key Exchange protocol version 2, using authentication keys and international identities (like a SIM/AKA method).

The application server AS manages a database DB containing user profiles and user secrets such as authentication keys and international identities.

The application server AS provides a web service that is dedicated to a set of users defining a community and allowing the set of users to exchange data between them. For example, the community corresponds to a group belonging to a social network, a group of discussion in a forum, or a group sharing uploaded or downloaded data. This kind of service is hereinafter called community service.

According to an embodiment, the telecommunication network operator provides smart card to a user which has at least one profile valid in the register HLR of the telecommunication network. Then the operator configures a new profile on the smart card based on an authentication key AK_Co and an international identity IMSI_Co, on behalf of a given application server providing at least one community service identified by a service identifier IdS_Co. To this end, the processing unit PU of the personalization server PS generates the authentication key AK_Co and the international identity IMSI_Co. The network interface NI of the personalization server PS pushes the generated authentication key AK_Co and international identity IMSI_Co to the smart card and transmit them to the application server AS through a secured channel. Optionally, the personalization server does not need to store the generated authentication key AK_Co and international identity IMSI_Co.

Each couple AK_Co and IMSI_Co is dedicated to a community service and can be transmitted to the smart card of each user belonging to the community.

Once the smart card and the profile are configured, the application server can authenticate the user using tools like IKEv2/EAP protocols and can establish a secured tunnel between the user and the server.

Additionally, the application server AS can create a virtual private network VPN between the users belonging to the community, once each user is authenticated and connected to the application server. The traffic between the user and the application server AS can be then fully encrypted, thanks to a key derivated from the shared secret AK_Co.

The application server AS connects all community members altogether. Each community member receives a new IP address unique in the community. The community traffic is tunneled to the application server AS which is also responsible of delivering the IP addresses, using the protocol DHCP (Dynamic Host Configuration Protocol) for example.

Optionally, the functions related to the virtual private network VPN can be managed by the security server SS connected to the application server AS. The security server SS ca act as a security gateway.

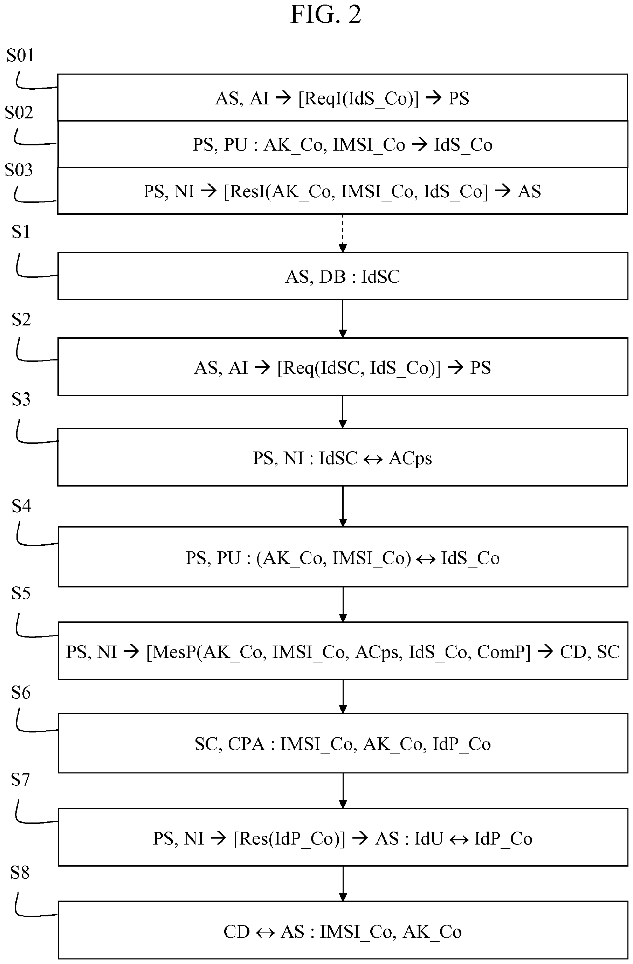

With reference to FIG. 2, a method for enabling a secured authentication between a communication device and a server providing a service according to one embodiment of the invention comprises steps S1 to S8 executed automatically within the communication system.

The method is described hereinafter with reference to the application server AS using services offered by the personalization server PS in order to be able to authenticate a set of users based on generated authentication key and international identity.

In an embodiment, the personalization server PS also stores the admin codes ACps respectively associated with smart cards SC of users who are subscribers of the telecommunication network TN. The admin codes ACps may be obtained from the smart card manufacturer, before the smart cards are provided to the operators. For example, the admin code ACps is stored in correspondence with at least one identifier IdSC of the smart card.

Once a smart card is provided to the operator and attributed to a user who becomes a subscriber of the operator, the operator personalizes the smart card by creating an international identity and an authentication key. The personalization of the smart card could be also outsourced to the smart card manufacturer, or any other trusted third party. The created international identity and authentication key are stored in the register HLR in correspondence with the identifier of the smart card.

At an initial step S01, the application server AS establishes a secured session, for example of IPsec type, with the personalization server PS in the telecommunication network TN.

The authentication interface AI of the application server AS sends an initialization request ReqI to the personalization server PS, the message Mes containing an identifier IdS_Co of the community service provided by the application server AS.

At an initial step S02, the processing unit PU of the personalization server PS generates an authentication key AK_Co and an international identity IMSI_Co that are stored in correspondence with the identifier IdS_Co of the community service. The authentication key AK_Co and the international identity IMSI_Co are intended to be shared between a set of user associated with the community service.

At an initial step S03, the network interface NI of the personalization server PS sends an initialization response ResI to the application server AS, the initialization response ResI containing the generated authentication key AK_Co and international identity IMSI, and optionally the identifier IdS_Co of the community service that can be used especially in case the application server AS provides several community services.

At step S1, the user establishes a connection with the application server AS providing a given community service, via a device, for example the communication device CD.

The user solicits a request in order to be eligible for a secure authentication with the application server. For example, the user is logged in a website hosted by the application server, and performs actions and complete information fields for validating such a request.

The user provides an identifier IdSC of the smart card, the identifier being then stored in the database DB of the application server AS.

The user is invited to provide an identifier that uniquely identifies the smart card of the user. For example, the identifier IdSC of smart card is a MSISDN number or a call number. The MSISDN is a number that is easy to remember and known by the user. In other examples, the identifier IdSC can be a serial number or the identity IMSI.

In all cases, it is assumed that the identifier IdSC asked by the application server corresponds to data also known by the personalization server PS.

Additionally, the user provides a user identifier IdU that identifies the user in the community. For example, the user identifier IdU is a pseudo.

At step S2, the application server AS establishes a secured session, for example of IPsec type, with the telecommunication network TN, in particular with the personalization server PS.

The authentication interface AI of the application server AS sends a request Req to the personalization server PS, the request containing the user identifier IdU, the identifier IdSC of the smart card and an identifier IdS_Co of the community service provided by the application server AS.

At step S3, the network interface NI of the personalization server PS receives the request Req. The network interface NI retrieves an identifier IdSC in a database corresponding to the identifier IdSC contained in the received request.

Then, the network interface NI retrieves then the admin code ACps stored in correspondence with the identifier IdSC of the smart card in the database.

At step S4, the processing unit PU of the personalization server PS retrieves the authentication key AK_Co and the international identity IMSI_Co associated with the service identifier IdS_Co.

Additionally, the processing unit PU of the personalization server PS generates a profile identifier IdP_Co for the user in the community, corresponding to the user identifier IdU.

At step S5, the network interface NI of the personalization server PS identifies the smart card SC and the communication device CD by means of the identifier IdSC. The network interface NI of the personalization server PS sends a personalization message MesP to the communication device CD, the personalization message MesP containing the authentication key AK_Co, the international identity IMSI_Co, the admin code ACps, the identifier IdS_Co of the community service, the profile identifier IdP_Co and a personalization command ComP.

The personalization message MesP is sent from the personalization server PS across the telecommunication network TN to the smart card SC via the communication interface of the communication device CD.

For example, the personalization message MesP is transformed by a short message center of the telecommunication network TN into a short message that is encrypted. The received personalization message MesP is decrypted by the smart card and the content of the message is temporarily stored in the card memories CM of the smart card to be executed by the card personalization application CPA.

In one embodiment, the personalization message MesP is transformed by a short message center SMSC of the telecommunication network TN into a short message that is encrypted. The received personalization message MesP is decrypted by the smart card and the content of the message is temporarily stored in the card memories CM of the smart card to be executed by the card personalization application CPA.

In another embodiment, the personalization message MesP contains data packets and is transmitted through the SGSN and GGSN nodes via a secured session for example of IPsec (Internet Protocol Security) type. In this case, a short message is first sent to the smart card that will launch the establishment of data connection with the personalization server.

It will be understood that the personalization message MesP can be decomposed in several messages, especially in the case where the personalization message MesP is in form of a short message.

At step S6, the card personalization application CPA interprets the personalization command ComP to execute the personalization of the smart card SC. The card personalization application CPA checks if the admin code ACps is valid, that is to say if the admin code ACps received in the personalization message MesP is compatible with the admin code ACsc initially stored in the smart card. In one example, the admin code ACps received in the personalization message MesP has to be the same as the admin code ACsc initially stored in the smart card. More generally, the admin codes may be tools used for authentication and ciphering procedures in case the personalization message MesP is decomposed in several messages.

If the admin code ACps is valid, the card personalization application CPA stores a new user profile containing at least the authentication key AK_Co, the international identity IMSI_Co, the profile identifier IdP_Co and the identifier IdS_Co of the community service.

This new profile is dedicated to the community service provided by the application server, besides the classic telecom profile of the user containing the authentication key AK and the international identity IMSI used for authentication with the telecommunication network TN.

Optionally, the card personalization application CPA can activate the device personalization application DPA in order to ask an acknowledgement of the user for the card personalization. For example, the device personalization application DPA displays a question like the following: "Do you accept to use the secured authentication for the community service X?".

At step S7, the network interface NI of the personalization server PS sends a response Res to the application server AS, the response Res containing, the profile identifier IdP_Co and optionally the user identifier IdU, the authentication key AK_Co and the international identity IMSI_Co.

The application server AS stores the received profile identifier IdP_Co in correspondence with the authentication key AK_Co and international identity IMSI_Co and in correspondence with the user identifier IdU in the database DB, for further use in authentication of the user.

At step S8, the communication device CD establishes again a connection with the application server AS.

The authentication interface AI of the application server AS can use a secured authentication, based on a protocol such as EAP/IKEv2, using the authentication key AK_Co and the international identity IMSI_Co. To this end, the device personalization application DPA collaborates with the card personalization application CPA to retrieve the authentication key AK_Co and the international identity IMSI_Co.

Additionally, the communication device CD can send the profile identifier IdP_Co to the application server AS that can retrieve the user identifier IdU stored in correspondence with the profile identifier IdP_in the database DB. The user can be logged to the community service and uniquely identified by the user identifier IdU within the community. Advantageously, the user does not have anymore to provide and remember the user identifier IdU, like a pseudo, as this latter is automatically retrieved by the application server.

The invention described here relates to a method and a server for enabling a secured authentication between a communication device and a server delivering a community service. In an embodiment, the steps of the method of the invention are determined by the instructions of a computer program incorporated in a server such as the application server AS or the personalization server PS according to the invention. The program includes program instructions which, when said program is executed in a processor of the server the operation whereof is then controlled by the execution of the program, execute the steps of the method according to the invention.

As a consequence, the invention applies also to a computer program, in particular a computer program on or in an information medium readable by a data processing device, adapted to implement the invention. That program may use any programming language and be in the form of source code, object code or an intermediate code between source code and object code, such as a partially compiled form, or in any other desirable form for implementing the method according to the invention.

The information medium may be any entity or device capable of storing the program. For example, the medium may include storage means or a recording medium on which the computer program according to the invention is recorded, such as a ROM, for example a CD ROM or a microelectronic circuit ROM, or a USB key, or magnetic recording means, for example a diskette (floppy disk) or a hard disk.

Although multiple embodiments of the present invention have been illustrated in the accompanying drawings and described in the foregoing detailed description, it should be understood that the present invention is not limited to the disclosed embodiments, but is capable of numerous rearrangements, modifications and substitutions without departing from the invention as set forth and defined by the following claims.

## Claims

1. A method for enabling a secured authentication between a communication device (CD) that is coupled with a smart card (SC) of a user being a subscriber of a telecommunication network (TN) and an application server (AS) that provides a service dedicated to a set of users and is connected to the telecommunication network (TN), the method comprising the following steps in a personalization server (PS) included in the telecommunication network (TN):
receiving (S01) a first request (Reql) from the application server (AS), the first request containing an identifier (IdS_Co) of said service,
generating (S02) an authentication key (AK_Co) and an international identity (IMSI_Co) that are stored in correspondence with the identifier (IdS_Co) of said service,
sending (S03) a first response (ResI) to the application server (AS), the first response (ResI) containing the generated authentication key (AK_Co) and international identity (IMSI_Co),
receiving (S2) a second request (Req) from the application server (AS), the request containing an identifier (IdSC) of the smart card and the identifier (IdS_Co) of said service,
retrieving (S4) the authentication key (AK_Co) and the international identity (IMSI_Co) stored in correspondence with the identifier (IdS_Co) of said service,
sending (S5) a message (MesP) to the communication device (CD), the message (MesP) containing the authentication key (AK_Co), the international identity (IMSI_Co), an admin code (ACps), the identifier (IdS_Co) of said service, and a personalization command (ComP), in order that the smart card (SC) interprets (S6) the personalization command (ComP) to store the authentication key (AK_Co), the international identity (IMSI_Co) and the identifier (IdS_Co) of said service if the admin code (ACps) is valid.

2. A method according to claim 1, wherein the application server (AS) is able to authenticate the communication device (CD) by means of a protocol using the authentication key (AK_Co) and the international identity (IMSI_Co).

3. A method according to claim 1 or 2, wherein the personalization server (PS) identifies the communication device (CD) by means of the identifier (IdSC) of the smart card.

4. A method according to claim 3, wherein the identifier (IdSC) of the smart card is a call number.

5. A method according to any of claims 1 to 4, wherein the personalization server (PS) retrieves the admin code (ACps) that was initially stored in a database in correspondence with an identifier of the smart card corresponding to the identifier (IdSC) of the smart card comprised in the received second request (Req).

6. A method according to any of claims 1 to 5, wherein an application (CPA) in the smart card (SC) checks if the admin code (ACps) received in the message (MesP) is compatible with the admin code (ACsc) initially stored in the smart card in order to determine if the admin code (ACps) is valid.

7. A method according to any of claims 1 to 6, wherein the message (MesP) is an encrypted short message and is decomposed in several messages.

8. A method according to any of claims 1 to 6, wherein the message (MesP) contains data packets sent to the smart card (SC) through a service node (SGSN) and a gateway node (GGSN) of the telecommunication network (TN2) via a secured session.

9. A method according to any of claims 1 to 8, wherein the second request (Req) further contains a user identifier (IdU) that identifies the user within the set of users, the personalization server (PS) generates a profile identifier (IdP_Co) corresponding to the user identifier (IdU), and sends a second response (Rep) containing the profile identifier (IdP_Co) to the application server (AS), and wherein the message (MesP) further contains the profile identifier (IdP_Co).

10. A method for enabling a secured authentication between a communication device (CD) that is coupled with a smart card (SC) of a user being a subscriber of a telecommunication network (TN) and an application server (AS) that provides a service dedicated to a set of users and is connected to the telecommunication network (TN), the method comprising the following steps in the application server (AS):
sending (S01) a first request (ReqI) to the personalization server (PS), the first request containing an identifier (IdS_Co) of said service,
receiving (S03) a first response (Resl) sent from the personalization server (PS), the first response (Resl) containing an authentication key (AK_Co) and an international identity (IMSI_Co), the personalization server (PS) having generated the authentication key (AK_Co) and the international identity (IMSI_Co) that are stored in correspondence with the identifier (IdS_Co) of said service,
sending (S2) a second request (Req) to the personalization server (PS), the request containing an identifier (IdSC) of the smart card and the identifier (IdS_Co) of said service, in order that the personalization server (PS) retrieves the authentication key (AK_Co) and the international identity (IMSI_Co) stored in correspondence with the identifier (IdS_Co) of said service, and that the personalization server (PS) sends a message (MesP) to the communication device (CD), the message (MesP) containing the authentication key (AK_Co), the international identity (IMSI_Co), an admin code (ACps), the identifier (IdS_Co) of said service, and a personalization command (ComP), in order that the smart card (SC) interprets (S6) the personalization command (ComP) to store the authentication key (AK_Co), the international identity (IMSI_Co) and the identifier (IdS_Co) of said service if the admin code (ACps) is valid.

11. A personalization server (PS) for enabling a secured authentication between a communication device (CD) that is coupled with a smart card (SC) of a user being a subscriber of a telecommunication network (TN) and an application server (AS) that provides a service dedicated to a set of users and is connected to the telecommunication network (TN), the personalization server (PS) being included in the telecommunication network (TN) and comprising:
means (NI) for receiving a first request (Reql) from the application server (AS), the first request containing an identifier (IdS_Co) of said service,
means (PU) for generating an authentication key (AK_Co) and an international identity (IMSI_Co) that are stored in correspondence with the identifier (IdS_Co) of said service,
means (NI) for sending a first response (ResI) to the application server (AS), the first response (ResI) containing the generated authentication key (AK_Co) and international identity (IMSI_Co),
means (NI) for receiving a second request (Req) from the application server (AS), the request containing an identifier (IdSC) of the smart card and the identifier (IdS_Co) of said service,
means (PU) for retrieving the authentication key (AK_Co) and the international identity (IMSI_Co) stored in correspondence with the identifier (IdS_Co) of said service,
means (NI) for sending a message (MesP) to the communication device (CD), the message (MesP) containing the authentication key (AK_Co), the international identity (IMSI_Co), an admin code (ACps), the identifier (IdS_Co) of said service, and a personalization command (ComP), in order that the smart card (SC) interprets (S6) the personalization command (ComP) to store the authentication key (AK_Co), the international identity (IMSI_Co) and the identifier (IdS_Co) of said service if the admin code (ACps) is valid.

12. An application server (AS) for enabling a secured authentication between a communication device (CD) that is coupled with a smart card (SC) of a user being a subscriber of a telecommunication network (TN) and the application server (AS) that provides a service dedicated to a set of users and is connected to the telecommunication network (TN), the application server (AS) comprising:
means (AI) for sending a first request (Reql) to the personalization server (PS), the first request containing an identifier (IdS_Co) of said service,
means (AI) for receiving a first response (ResI) sent from the personalization server (PS), the first response (ResI) containing an authentication key (AK_Co) and an international identity (IMSI_Co), the personalization server (PS) having generated the authentication key (AK_Co) and the international identity (IMSI_Co) that are stored in correspondence with the identifier (IdS_Co) of said service,
means (AI) for sending a second request (Req) to the personalization server (PS), the request containing an identifier (IdSC) of the smart card and the identifier (IdS_Co) of said service, in order that the personalization server (PS) retrieves the authentication key (AK_Co) and the international identity (IMSI_Co) stored in correspondence with the identifier (IdS_Co) of said service, and that the personalization server (PS) sends a message (MesP) to the communication device (CD), the message (MesP) containing the authentication key (AK_Co), the international identity (IMSI_Co), an admin code (ACps), the identifier (IdS_Co) of said service, and a personalization command (ComP), in order that the smart card (SC) interprets (S6) the personalization command (ComP) to store the authentication key (AK_Co), the international identity (IMSI_Co) and the identifier (IdS_Co) of said service if the admin code (ACps) is valid.

13. An application server (AS) according to claim 12, wherein the application server (AS) is hosting a website providing said service that is dedicated to a set of users defining a community and allows the set of users to exchange data between them.

14. A computer program adapted to be executed in an personalization server (PS) for enabling a secured authentication between a communication device (CD) that is coupled with a smart card (SC) of a user being a subscriber of a telecommunication network (TN) and an application server (AS) that provides a service dedicated to a set of users and is connected to the telecommunication network (TN), the personalization server (PS) being included in the telecommunication network (TN), said program including instructions which, when said program is executed in said personalization server, execute the following steps :
receiving (S01) a first request (Reql) from the application server (AS), the first request containing an identifier (IdS_Co) of said service,
generating (S02) an authentication key (AK_Co) and an international identity (IMSI_Co) that are stored in correspondence with the identifier (IdS_Co) of said service,
sending (S03) a first response (ResI) to the application server (AS), the first response (Resl) containing the generated authentication key (AK_Co) and international identity (IMSI_Co),
receiving (S2) a second request (Req) from the application server (AS), the request containing an identifier (IdSC) of the smart card and the identifier (IdS_Co) of said service,
retrieving (S4) the authentication key (AK_Co) and the international identity (IMSI_Co) stored in correspondence with the identifier (IdS_Co) of said service,
sending (S5) a message (MesP) to the communication device (CD), the message (MesP) containing the authentication key (AK_Co), the international identity (IMSI_Co), an admin code (ACps), the identifier (IdS_Co) of said service, and a personalization command (ComP), in order that the smart card (SC) interprets (S6) the personalization command (ComP) to store the authentication key (AK_Co), the international identity (IMSI_Co) and the identifier (IdS_Co) of said service if the admin code (ACps) is valid.

15. A computer program adapted to be executed in an application server (AS) for enabling a secured authentication between a communication device (CD) that is coupled with a smart card (SC) of a user being a subscriber of a telecommunication network (TN) and the application server (AS) that provides a service dedicated to a set of users and is connected to the telecommunication network (TN), said program including instructions which, when said program is executed in said application server, execute the following steps :
sending (S01) a first request (Reql) to the personalization server (PS), the first request containing an identifier (IdS_Co) of said service,
receiving (S03) a first response (ResI) sent from the personalization server (PS), the first response (ResI) containing an authentication key (AK_Co) and an international identity (IMSI_Co), the personalization server (PS) having generated the authentication key (AK_Co) and the international identity (IMSI_Co) that are stored in correspondence with the identifier (IdS_Co) of said service,
sending (S2) a second request (Req) to the personalization server (PS), the request containing an identifier (IdSC) of the smart card and the identifier (IdS_Co) of said service, in order that the personalization server (PS) retrieves the authentication key (AK_Co) and the international identity (IMSI_Co) stored in correspondence with the identifier (IdS_Co) of said service, and that the personalization server (PS) sends a message (MesP) to the communication device (CD), the message (MesP) containing the authentication key (AK_Co), the international identity (IMSI_Co), an admin code (ACps), the identifier (IdS_Co) of said service, and a personalization command (ComP), in order that the smart card (SC) interprets (S6) the personalization command (ComP) to store the authentication key (AK_Co), the international identity (IMSI_Co) and the identifier (IdS_Co) of said service if the admin code (ACps) is valid.

## Patentansprüche

1. Verfahren zum Ermöglichen einer gesicherten Authentifizierung zwischen einer Kommunikationsvorrichtung (CD), die mit einer Smartcard (SC) eines Benutzers gekoppelt ist, der ein Teilnehmer eines Telekommunikationsnetzwerks (TN) ist, und einem Anwendungsserver (AS), der einen Dienst für eine Gruppe von Benutzern bereitstellt und mit dem Telekommunikationsnetzwerk (TN) verbunden ist, wobei das Verfahren die folgenden Schritte in einem Personalisierungsserver (PS) umfasst, der in dem Telekommunikationsnetzwerk (TN) enthalten ist:
Empfangen (S01) einer ersten Anfrage (Reql) vom Anwendungsserver (AS), wobei die erste Anfrage eine Kennung (IdS_Co) von besagtem Dienst enthält,
Erzeugen (S02) eines Authentifizierungsschlüssels (AK_Co) und einer internationalen Identität (IMSI_Co), die gespeichert sind in Übereinstimmung mit der Kennung (IdS_Co) von besagtem Dienst,
Senden (S03) einer ersten Antwort (ResI) an den Anwendungsserver (AS), wobei die erste Antwort (ResI) den erzeugten Authentifizierungsschlüssel (AK_Co) und die internationale Identität (IMSI_Co) enthält,
Empfangen (S2) einer zweiten Anfrage (Req) vom Anwendungsserver (AS), wobei die Anfrage eine Kennung (IdSC) der Smartcard und die Kennung (IdS_Co) von besagtem Dienst enthält,
Abrufen (S4) des Authentifizierungsschlüssels (AK_Co) und der internationalen Identität (IMSI_Co), die gespeichert sind in Übereinstimmung mit der Kennung (IdS_Co) von besagtem Dienst,
Senden (S5) einer Nachricht (MesP) an die Kommunikationsvorrichtung (CD), wobei die Nachricht (MesP) den Authentifizierungsschlüssel (AK_Co), die internationale Identität (IMSI_Co), einen Verwaltungscode (ACps), die Kennung (IdS_Co) von besagtem Dienst und einen Personalisierungsbefehl (ComP) enthält, damit die Smartcard (SC) den Personalisierungsbefehl (ComP) interpretiert (S6) zum Speichern des Authentifizierungsschlüssels (AK_Co), der internationalen Identität (IMSI_Co) und der Kennung (IdS_Co) des besagten Dienstes, wenn der Verwaltungscode (ACps) gültig ist.

2. Verfahren nach Anspruch 1, wobei der Anwendungsserver (AS) die Kommunikationsvorrichtung (CD) authentifizieren kann mittels eines Protokolls unter Verwendung des Authentifizierungsschlüssels (AK_Co) und der internationalen Identität (IMSI_Co).

3. Verfahren nach Anspruch 1 oder 2, wobei der Personalisierungsserver (PS) die Kommunikationsvorrichtung (CD) mittels einer Kennung (IdSC) der Smartcard identifiziert.

4. Verfahren nach Anspruch 3, wobei die Kennung (IdSC) der Smartcard eine Anrufnummer ist.

5. Verfahren nach einem der Ansprüche 1 bis 4, wobei der Personalisierungsserver (PS) den Verwaltungscode (ACps) abruft, der ursprünglich in einer Datenbank in Übereinstimmung mit einer Kennung der Smartcard gespeichert wurde, die einer Kennung (IdSC) der Smartcard entspricht, die in der empfangenen zweiten Anfrage (Req) enthalten ist.

6. A Verfahren nach einem der Ansprüche 1 bis 5, wobei eine Anwendung (CPA) in der Smartcard (SC) prüft, ob der in der Nachricht (MesP) empfangene Verwaltungscode (ACps) mit dem anfangs in der Smartcard gespeicherten Verwaltungscode (ACps) kompatibel ist, um zu bestimmen, ob der Verwaltungscode (ACps) gültig ist.

7. Verfahren nach einem der Ansprüche 1 bis 6, wobei die Nachricht (MesP) eine verschlüsselte Kurznachricht ist und aufgeteilt ist in mehrere Nachrichten.

8. Verfahren nach einem der Ansprüche 1 bis 6, wobei die Nachricht (MesP) Datenpakete enthält, die über einen Dienstknoten (SGSN) und einen Gateway-Knoten (GGSN) des Telekommunikationsnetzwerks (TN2) über eine gesicherte Sitzung an die Smartcard (SC) gesendet wurden.

9. Verfahren nach einem der Ansprüche 1 bis 8, wobei die zweite Anfrage (Req) weiter eine Benutzerkennung (IdU) enthält, welche den Benutzer innerhalb einer Gruppe von Benutzern informiert, wobei der Personalisierungsserver (PS) eine Profilkennung (IdP_Co) erzeugt, welche der Benutzerkennung (IdU) entspricht, und eine zweite Antwort (Rep), welche die Profilkennung (IdP_Co) enthält, an den Anwendungsserver (AS) sendet, und wobei die Nachricht (MesP) weiter die Profilkennung (IdP_Co) enthält.

10. Verfahren zum Ermöglichen einer gesicherten Authentifizierung zwischen einer Kommunikationsvorrichtung (CD), die mit einer Smartcard (SC) eines Benutzers gekoppelt ist, der ein Teilnehmer eines Telekommunikationsnetzwerks (TN) ist, und einem Anwendungsserver (AS), der einen Dienst für eine Gruppe von Benutzern bereitstellt und mit dem Telekommunikationsnetzwerk (TN) verbunden ist, wobei das Verfahren die folgenden Schritte im Anwendungsserver (AS) umfasst:
Senden (S01) einer ersten Anfrage (Reql) an den Personalisierungsserver (PS), wobei die erste Anfrage eine Kennung (IdS_Co) von besagtem Dienst enthält,
Empfangen (S03) einer ersten Antwort (ResI), gesendet vom Personalisierungsserver (PS), wobei die erste Antwort (ResI) einen Authentifizierungsschlüssel (AK_Co) und eine internationale Identität (IMSI_Co) enthält, und wobei der Personalisierungsserver (PS) den Authentifizierungsschlüssel (AK_Co) und die internationale Identität (IMSI_Co) erzeugt hat, die in Übereinstimmung mit der Kennung (IdS_Co) von besagtem Dienst gespeichert sind,
Senden (S2) einer zweiten Anfrage (Req) an den Personalisierungsserver (PS), wobei die Anfrage eine Kennung (IdSC) der Smartcard und die Kennung (IdS_Co) von besagtem Dienst enthält, damit der Personalisierungsserver (PS) den Authentifizierungsschlüssel (AK_Co) und die internationale Identität (IMSI_Co), die in Übereinstimmung mit der Kennung (IdS_Co) von besagtem Dienst gespeichert sind, abruft, und damit der Personalisierungsserver (PS) eine Nachricht (MesP) an die Kommunikationsvorrichtung (CD) sendet, wobei die Nachricht (MesP) den Authentifizierungsschlüssel (AK_Co), die internationale Identität (IMSI_Co), einen Verwaltungscode (ACps), die Kennung (IdS_Co) von besagtem Dienst und einen Personalisierungsbefehl (ComP) enthält, damit die Smartcard (SC) den Personalisierungsbefehl (ComP) interpretiert (S6) zum Speichern des Authentifizierungsschlüssels (AK_Co), der internationalen Identität (IMSI_Co) und der Kennung (IdS_Co) des besagten Dienstes, wenn der Verwaltungscode (ACps) gültig ist.

11. Personalisierungsserver (PS) zum Ermöglichen einer gesicherten Authentifizierung zwischen einer Kommunikationsvorrichtung (CD), die mit einer Smartcard (SC) eines Benutzers gekoppelt ist, der ein Teilnehmer eines Telekommunikationsnetzwerks (TN) ist, und ein Anwendungsserver (AS), der einen Dienst für eine Gruppe von Benutzern bereitstellt und mit dem Telekommunikationsnetzwerk (TN) verbunden ist, wobei der Personalisierungsserver (PS) in dem Telekommunikationsnetzwerk (TN) enthalten ist, umfassend:
Mittel (NI) zum Empfangen einer ersten Anfrage (Reql) vom Anwendungsserver (AS), wobei die erste Anfrage eine Kennung (IdS_Co) von besagtem Dienst enthält,
Mittel (PU) zum Erzeugen eines Authentifizierungsschlüssels (AK_Co) und einer internationalen Identität (IMSI_Co), die gespeichert sind in Übereinstimmung mit der Kennung (IdS_Co) von besagtem Dienst,
Mittel (NI) zum Senden einer ersten Antwort (ResI) an den Anwendungsserver (AS), wobei die erste Antwort (ResI) den erzeugten Authentifizierungsschlüssel (AK_Co) und die internationale Identität (IMSI_Co) enthält,
Mittel (NI) zum Empfangen einer zweiten Anfrage (Req) vom Anwendungsserver (AS), wobei die Anfrage eine Kennung (IdSC) der Smartcard und die Kennung (IdS_Co) von besagtem Dienst enthält,
Mittel (PU) zum Abrufen des Authentifizierungsschlüssels (AK_Co) und der internationalen Identität (IMSI_Co), die gespeichert sind in Übereinstimmung mit der Kennung (IdS_Co) von besagtem Dienst,
Mittel (NI) zum Senden einer Nachricht (MesP) an die Kommunikationsvorrichtung (CD), wobei die Nachricht (MesP) den Authentifizierungsschlüssel (AK_Co), die internationale Identität (IMSI_Co), einen Verwaltungscode (ACps), die Kennung (IdS_Co) von besagtem Dienst und einen Personalisierungsbefehl (ComP) enthält, damit die Smartcard (SC) den Personalisierungsbefehl (ComP) interpretiert (S6) zum Speichern des Authentifizierungsschlüssels (AK_Co), der internationalen Identität (IMSI_Co) und der Kennung (IdS_Co) des besagten Dienstes, wenn der Verwaltungscode (ACps) gültig ist.

12. Anwendungsserver (AS) zum Ermöglichen einer gesicherten Authentifizierung zwischen einer Kommunikationsvorrichtung (CD), die mit einer Smartcard (SC) eines Benutzers gekoppelt ist, der ein Teilnehmer eines Telekommunikationsnetzwerks (TN) ist, und dem Anwendungsserver (AS), der einen Dienst für eine Gruppe von Benutzern bereitstellt und mit dem Telekommunikationsnetzwerk (TN) verbunden ist, wobei das Verfahren umfasst:
Mittel (AI) zum Senden einer ersten Anfrage (Reql) an den Personalisierungsserver (PS), wobei die erste Anfrage eine Kennung (IdS_Co) von besagtem Dienst enthält,
Mittel (AI) zum Empfangen einer ersten Antwort (ResI), gesendet vom Personalisierungsserver (PS), wobei die erste Antwort (ResI) einen Authentifizierungsschlüssel (AK_Co) und eine internationale Identität (IMSI_Co) enthält, und wobei der Personalisierungsserver (PS) den Authentifizierungsschlüssel (AK_Co) und die internationale Identität (IMSI_Co) erzeugt hat, die in Übereinstimmung mit der Kennung (IdS_Co) von besagtem Dienst gespeichert sind,
Mittel (AI) zum Senden einer zweiten Anfrage (Req) an den Personalisierungsserver (PS), wobei die Anfrage eine Kennung (IdSC) der Smartcard und die Kennung (IdS_Co) von besagtem Dienst enthält, damit der Personalisierungsserver (PS) den Authentifizierungsschlüssel (AK_Co) und die internationale Identität (IMSI_Co), die in Übereinstimmung mit der Kennung (IdS_Co) von besagtem Dienst gespeichert sind, abruft, und damit der Personalisierungsserver (PS) eine Nachricht (MesP) an die Kommunikationsvorrichtung (CD) sendet, wobei die Nachricht (MesP) den Authentifizierungsschlüssel (AK_Co), die internationale Identität (IMSI_Co), einen Verwaltungscode (ACps), die Kennung (IdS_Co) von besagtem Dienst und einen Personalisierungsbefehl (ComP) enthält, damit die Smartcard (SC) den Personalisierungsbefehl (ComP) interpretiert (S6) zum Speichern des Authentifizierungsschlüssels (AK_Co), der internationalen Identität (IMSI_Co) und der Kennung (IdS_Co) des besagten Dienstes, wenn der Verwaltungscode (ACps) gültig ist.

13. Anwendungsserver (AS) nach Anspruch 12, wobei der Anwendungsserver (AS) eine Webseite hostet, die besagten Dienst bereitstellt, der für eine Gruppe von Benutzern bestimmt ist, die eine Community definiert, und welcher der Gruppe von Benutzer erlaubt, Daten untereinander auszutauschen.

14. Computerprogramm, angepasst zum Ausführen in einem Personalisierungsserver (PS) zum Ermöglichen einer gesicherten Authentifizierung zwischen einer Kommunikationsvorrichtung (CD), die mit einer Smartcard (SC) eines Benutzers gekoppelt ist, der ein Teilnehmer eines Telekommunikationsnetzwerks (TN) ist, und ein Anwendungsserver (AS), der einen Dienst bereitstellt, der für eine Gruppe von Benutzern bestimmt ist, und verbunden ist mit dem Telekommunikationsnetzwerk (TN), wobei der Personalisierungsserver (PS) in einem Telekommunikationsnetzwerk (TN) enthalten ist und wobei besagtes Programm Anweisungen enthält, die, wenn besagtes Programm in besagtem Personalisierungsserver ausgeführt wird, die folgenden Schritte ausführt:
Empfangen (S01) einer ersten Anfrage (Reql) vom Anwendungsserver (AS), wobei die erste Anfrage eine Kennung (IdS_Co) von besagtem Dienst enthält,
Erzeugen (S02) eines Authentifizierungsschlüssels (AK_Co) und einer internationalen Identität (IMSI_Co), die gespeichert sind in Übereinstimmung mit der Kennung (IdS_Co) von besagtem Dienst,
Senden (S03) einer ersten Antwort (ResI) an den Anwendungsserver (AS), wobei die erste Antwort (ResI) den erzeugten Authentifizierungsschlüssel (AK_Co) und die internationale Identität (IMSI_Co) enthält,
Empfangen (S2) einer zweiten Anfrage (Req) vom Anwendungsserver (AS), wobei die Anfrage eine Kennung (IdSC) der Smartcard und die Kennung (IdS_Co) von besagtem Dienst enthält,
Abrufen (S4) des Authentifizierungsschlüssels (AK_Co) und der internationalen Identität (IMSI_Co), die gespeichert sind in Übereinstimmung mit der Kennung (IdS_Co) von besagtem Dienst,
Senden (S5) einer Nachricht (MesP) an die Kommunikationsvorrichtung (CD), wobei die Nachricht (MesP) den Authentifizierungsschlüssel (AK_Co), die internationale Identität (IMSI_Co), einen Verwaltungscode (ACps), die Kennung (IdS_Co) von besagtem Dienst und einen Personalisierungsbefehl (ComP) enthält, damit die Smartcard (SC) den Personalisierungsbefehl (ComP) interpretiert (S6) zum Speichern des Authentifizierungsschlüssels (AK_Co), der internationalen Identität (IMSI_Co) und der Kennung (IdS_Co) des besagten Dienstes, wenn der Verwaltungscode (ACps) gültig ist.

15. Computerprogramm, angepasst zum Ausführen in einem Anwendungsserver (AS) zum Ermöglichen einer gesicherten Authentifizierung zwischen einer Kommunikationsvorrichtung (CD), die mit einer Smartcard (SC) eines Benutzers gekoppelt ist, der ein Teilnehmer eines Telekommunikationsnetzwerks (TN) ist, und dem Anwendungsserver (AS), der einen Dienst bereitstellt, der für eine Gruppe von Benutzern bestimmt ist, und verbunden ist mit dem Telekommunikationsnetzwerk (TN), wobei besagtes Programm Anweisungen enthält, die, wenn besagtes Programm in besagtem Anwendungsserver ausgeführt wird, die folgenden Schritte ausführt:
Senden (S01) einer ersten Anfrage (Reql) an den Personalisierungsserver (PS), wobei die erste Anfrage eine Kennung (IdS_Co) von besagtem Dienst enthält,
Empfangen (S03) einer ersten Antwort (ResI), gesendet vom Personalisierungsserver (PS), wobei die erste Antwort (ResI) einen Authentifizierungsschlüssel (AK_Co) und eine internationale Identität (IMSI_Co) enthält, und wobei der Personalisierungsserver (PS) den Authentifizierungsschlüssel (AK_Co) und die internationale Identität (IMSI_Co) erzeugt hat, die in Übereinstimmung mit der Kennung (IdS_Co) von besagtem Dienst gespeichert sind,
Senden (S2) einer zweiten Anfrage (Req) an den Personalisierungsserver (PS), wobei die Anfrage eine Kennung (IdSC) der Smartcard und die Kennung (IdS_Co) von besagtem Dienst enthält, damit der Personalisierungsserver (PS) den Authentifizierungsschlüssel (AK_Co) und die internationale Identität (IMSI_Co), die in Übereinstimmung mit der Kennung (IdS_Co) von besagtem Dienst gespeichert sind, abruft, und damit der Personalisierungsserver (PS) eine Nachricht (MesP) an die Kommunikationsvorrichtung (CD) sendet, wobei die Nachricht (MesP) den Authentifizierungsschlüssel (AK_Co), die internationale Identität (IMSI_Co), einen Verwaltungscode (ACps), die Kennung (IdS_Co) von besagtem Dienst und einen Personalisierungsbefehl (ComP) enthält, damit die Smartcard (SC) den Personalisierungsbefehl (ComP) interpretiert (S6) zum Speichern des Authentifizierungsschlüssels (AK_Co), der internationalen Identität (IMSI_Co) und der Kennung (IdS_Co) des besagten Dienstes, wenn der Verwaltungscode (ACps) gültig ist.

## Revendications

1. Procédé pour activer une authentification sécurisée entre un dispositif de communication (CD), qui est couplé à une carte à puce (SC) d'un utilisateur qui est abonné à un réseau de télécommunication (TN), et un serveur d'application (AS) qui fournit un service dédié à un ensemble d'utilisateurs et qui est connecté au réseau de télécommunication (TN), le procédé comprenant les étapes suivantes dans un serveur de personnalisation (PS) inclus dans le réseau de télécommunication (TN) :
recevoir (S01) une première demande (Reql) du serveur d'application (AS), la première demande contenant un identifiant (IdS_Co) dudit service,
générer (S02) une clé d'authentification (AK_Co) et une identité internationale (IMSI_Co) qui sont stockées en correspondance avec l'identifiant (IdS_Co) dudit service,
envoyer (S03) une première réponse (Resl) au serveur d'application (AS), la première réponse (Resl) contenant la clé d'authentification (AK_Co) et l'identité internationale (IMSI_Co) générées,
recevoir (S2) une deuxième demande (Req) du serveur d'application (AS), la demande contenant un identifiant (IdSC) de la carte à puce et l'identifiant (IDS_Co) dudit service,
récupérer (S4) la clé d'authentification (AK_Co) et l'identité internationale (IMSI_Co) stockées en correspondance avec l'identifiant (IdS_Co) dudit service,
envoyer (S5) un message (MesP) au dispositif de communication (CD), le message (MesP) contenant la clé d'authentification (AK_Co), l'identité internationale (IMSI_Co), un code administrateur (ACps), l'identifiant (IdS_Co) dudit service et une commande de personnalisation (ComP), afin que la carte à puce (SC) interprète (S6) la commande de personnalisation (ComP) pour stocker la clé d'authentification (AK_Co), l'identité internationale (IMSI_Co) et l'identifiant (IdS_Co) dudit service si le code administrateur (ACps) est valide.

2. Procédé selon la revendication 1, dans lequel le serveur d'application (AS) peut authentifier le dispositif de communication (CD) au moyen d'un protocole utilisant la clé d'authentification (AK_Co) et l'identité internationale (IMSI_Co).

3. Procédé selon la revendication 1 ou 2, dans lequel le serveur de personnalisation (PS) identifie le dispositif de communication (CD) au moyen de l'identifiant (IdSC) de la carte à puce.

4. Procédé selon la revendication 3, dans lequel l'identifiant (IdSC) de la carte à puce est un numéro d'appel.

5. Procédé selon l'une quelconque des revendications 1 à 4, dans lequel le serveur de personnalisation (PS) récupère le code administrateur (ACps) qui a été stocké initialement dans une base de données en correspondance avec un identifiant de la carte à puce correspondant à l'identifiant (IdSC) de la carte à puce compris dans la deuxième demande (Req) reçue.

6. Procédé selon l'une quelconque des revendications 1 à 5, dans lequel une application (CPA) dans la carte à puce (SC) vérifie si le code administrateur (ACps) reçu dans le message (MesP) est compatible avec le code administrateur (ACps) initialement stocké dans la carte à puce afin de déterminer si le code administrateur (ACps) est valide.

7. Procédé selon l'une quelconque des revendications 1 à 6, dans lequel le message (MesP) est un message court crypté et est décomposé en plusieurs messages.

8. Procédé selon l'une quelconque des revendications 1 à 6, dans lequel le message (MesP) contient des paquets de données envoyés à la carte à puce (SC) à travers un noeud de service (SGSN) et un noeud de passerelle (GGSN) du réseau de télécommunication (TN2) par l'intermédiaire d'une session sécurisée.

9. Procédé selon l'une quelconque des revendications 1 à 8, dans lequel la deuxième demande (Req) contient en outre un identifiant utilisateur (IdU) qui identifie l'utilisateur parmi l'ensemble d'utilisateurs, le serveur de personnalisation (PS) génère un identifiant de profil (IdP_Co) correspondant à l'identifiant utilisateur (IdU) et envoie une deuxième demande (Rep) contenant l'identifiant de profil (IdP_Co) au serveur d'application (AS), et dans lequel le message (MesP) contient en outre l'identifiant de profil (IdP_Co).

10. Procédé pour activer une authentification sécurisée entre un dispositif de communication (CD), qui est couplé à une carte à puce (SC) d'un utilisateur qui est abonné à un réseau de télécommunication (TN), et un serveur d'application (AS) qui fournit un service dédié à un ensemble d'utilisateurs et qui est connecté au réseau de télécommunication (TN), le procédé comprenant les étapes suivantes dans le serveur d'application (AS) :
envoyer (S01) une première demande (Reql) au serveur de personnalisation (PS), la première demande contenant un identifiant (IdS_Co) dudit service,
recevoir (S03) une première réponse (Resl) envoyée à partir du serveur de personnalisation (PS), la première réponse (Resl) contenant une clé d'authentification (AK_Co) et une identité internationale (IMSI_Co), le serveur de personnalisation (PS) ayant généré la clé d'authentification (AK_Co) et l'identité internationale (IMSI_Co) qui sont stockées en correspondance avec l'identifiant (IdS_Co) dudit service,
envoyer (S2) une deuxième demande (Req) au serveur de personnalisation (PS), la demande contenant un identifiant (IdSC) de la carte à puce et l'identifiant (IdS_Co) dudit service, afin que le serveur de personnalisation (PS) récupère la clé d'authentification (AK_Co) et l'identité internationale (IMSI_Co) stockées en correspondance avec l'identifiant (IdS_Co) dudit service, et que le serveur de personnalisation (PS) envoie un message (MesP) au dispositif de communication (CD), le message (MesP) contenant la clé d'authentification (AK_Co), l'identité internationale (IMSI_Co), un code administrateur (ACps), l'identifiant (IdS_Co) dudit service et une commande de personnalisation (ComP), afin que la carte à puce (SC) interprète (S6) la commande de personnalisation (ComP) pour stocker la clé d'authentification (AK_Co), l'identité internationale (IMSI_Co) et l'identifiant (IdS_Co) dudit service si le code administrateur (ACps) est valide.

11. Serveur de personnalisation (PS) pour activer une authentification sécurisée entre un dispositif de communication (CD), qui est couplé à une carte à puce (SC) d'un utilisateur qui est abonné à un réseau de télécommunication (TN), et un serveur d'application (AS) qui fournit un service dédié à un ensemble d'utilisateurs et qui est connecté au réseau de télécommunication (TN), le serveur de personnalisation (PS) étant inclus dans le réseau de télécommunication (TN) et comprenant :
des moyens (NI) pour recevoir une première demande (Reql) du serveur d'application (AS), la première demande contenant un identifiant (IdS_Co) dudit service,
des moyens (PU) pour générer une clé d'authentification (AK_Co) et une identité internationale (IMSI_Co) qui sont stockées en correspondance avec l'identifiant (IdS_Co) dudit service,
des moyens (NI) pour envoyer une première réponse (Resl) au serveur d'application (AS), la première réponse (Resl) contenant la clé d'authentification (AK_Co) et l'identité internationale (IMSI_Co) générées,
des moyens (NI) pour recevoir une deuxième demande (Req) du serveur d'application (AS), la demande contenant un identifiant (IdSC) de la carte à puce et l'identifiant (IDS_Co) dudit service,
des moyens (PU) pour récupérer la clé d'authentification (AK_Co) et l'identité internationale (IMSI_Co) stockées en correspondance avec l'identifiant (IdS_Co) dudit service,
des moyens (NI) pour envoyer un message (MesP) au dispositif de communication (CD), le message (MesP) contenant la clé d'authentification (AK_Co), l'identité internationale (IMSI_Co), un code administrateur (ACps), l'identifiant (IdS_Co) dudit service et une commande de personnalisation (ComP), afin que la carte à puce (SC) interprète (S6) la commande de personnalisation (ComP) pour stocker la clé d'authentification (AK_Co), l'identité internationale (IMSI_Co) et l'identifiant (IdS_Co) dudit service si le code administrateur (ACps) est valide.

12. Serveur d'application (AS) pour activer une authentification sécurisée entre un dispositif de communication (CD), qui est couplé à une carte à puce (SC) d'un utilisateur qui est abonné à un réseau de télécommunication (TN), et le serveur d'application (AS) qui fournit un service dédié à un ensemble d'utilisateurs et qui est connecté au réseau de télécommunication (TN), le serveur d'application (AS) comprenant :
des moyens (AI) pour envoyer une première demande (Reql) au serveur de personnalisation (PS), la première demande contenant un identifiant (IdS_Co) dudit service,
des moyens (AI) pour recevoir une première réponse (Resl) envoyée à partir du serveur de personnalisation (PS), la première réponse (Resl) contenant une clé d'authentification (AK_Co) et une identité internationale (IMSI_Co), le serveur de personnalisation (PS) ayant généré la clé d'authentification (AK_Co) et l'identité internationale (IMSI_Co) qui sont stockées en correspondance avec l'identifiant (IdS_Co) dudit service,
des moyens (AI) pour envoyer une deuxième demande (Req) au serveur de personnalisation (PS), la demande contenant un identifiant (IdSC) de la carte à puce et l'identifiant (IdS_Co) dudit service, afin que le serveur de personnalisation (PS) récupère la clé d'authentification (AK_Co) et l'identité internationale (IMSI_Co) stockées en correspondance avec l'identifiant (IdS_Co) dudit service, et que le serveur de personnalisation (PS) envoie un message (MesP) au dispositif de communication (CD), le message (MesP) contenant la clé d'authentification (AK_Co), l'identité internationale (IMSI_Co), un code administrateur (ACps), l'identifiant (IdS_Co) dudit service et une commande de personnalisation (ComP), afin que la carte à puce (SC) interprète (S6) la commande de personnalisation (ComP) pour stocker la clé d'authentification (AK_Co), l'identité internationale (IMSI_Co) et l'identifiant (IdS_Co) dudit service si le code administrateur (ACps) est valide.

13. Serveur d'application (AS) selon la revendication 12, le serveur d'application (AS) hébergeant un site Internet fournissant ledit service qui est dédié à un ensemble d'utilisateurs définissant une communauté et permettant à l'ensemble d'utilisateurs d'échanger des données entre eux.

14. Programme informatique adapté pour être exécuté dans un serveur de personnalisation (PS) pour activer une authentification sécurisée entre un dispositif de communication (CD), qui est couplé à une carte à puce (SC) d'un utilisateur qui est abonné à un réseau de télécommunication (TN), et un serveur d'application (AS) qui fournit un service dédié à un ensemble d'utilisateurs et qui est connecté au réseau de télécommunication (TN), le serveur de personnalisation (PS) étant inclus dans le réseau de télécommunication (TN) ledit programme comprenant des instructions qui, lorsque ledit programme est exécuté dans ledit serveur de personnalisation, exécutent les étapes suivantes :
recevoir (S01) une première demande (Reql) du serveur d'application (AS), la première demande contenant un identifiant (IdS_Co) dudit service,
générer (S02) une clé d'authentification (AK_Co) et une identité internationale (IMSI_Co) qui sont stockées en correspondance avec l'identifiant (IdS_Co) dudit service,
envoyer (S03) une première réponse (Resl) au serveur d'application (AS), la première réponse (Resl) contenant la clé d'authentification (AK_Co) et l'identité internationale (IMSI_Co) générées,
recevoir (S2) une deuxième demande (Req) du serveur d'application (AS), la demande contenant un identifiant (IdSC) de la carte à puce et l'identifiant (IDS_Co) dudit service,
récupérer (S4) la clé d'authentification (AK_Co) et l'identité internationale (IMSI_Co) stockées en correspondance avec l'identifiant (IdS_Co) dudit service,
envoyer (S5) un message (MesP) au dispositif de communication (CD), le message (MesP) contenant la clé d'authentification (AK_Co), l'identité internationale (IMSI_Co), un code administrateur (ACps), l'identifiant (IdS_Co) dudit service et une commande de personnalisation (ComP), afin que la carte à puce (SC) interprète (S6) la commande de personnalisation (ComP) pour stocker la clé d'authentification (AK_Co), l'identité internationale (IMSI_Co) et l'identifiant (IdS_Co) dudit service si le code administrateur (ACps) est valide.

15. Programme informatique adapté pour être exécuté dans un serveur d'application (AS) pour activer une authentification sécurisée entre un dispositif de communication (CD), qui est couplé à une carte à puce (SC) d'un utilisateur qui est abonné à un réseau de télécommunication (TN), et le serveur d'application (AS) qui fournit un service dédié à un ensemble d'utilisateurs et qui est connecté au réseau de télécommunication (TN), ledit programme comprenant des instructions qui, lorsque ledit programme est exécuté dans ledit serveur d'application, exécutent les étapes suivantes :
envoyer (S01) une première demande (Reql) au serveur de personnalisation (PS), la première demande contenant un identifiant (IdS_Co) dudit service,
recevoir (S03) une première réponse (Resl) envoyée à partir du serveur de personnalisation (PS), la première réponse (Resl) contenant une clé d'authentification (AK_Co) et une identité internationale (IMSI_Co), le serveur de personnalisation (PS) ayant généré la clé d'authentification (AK_Co) et l'identité internationale (IMSI_Co) qui sont stockées en correspondance avec l'identifiant (IdS_Co) dudit service,
envoyer (S2) une deuxième demande (Req) au serveur de personnalisation (PS), la demande contenant un identifiant (IdSC) de la carte à puce et l'identifiant (IdS_Co) dudit service, afin que le serveur de personnalisation (PS) récupère la clé d'authentification (AK_Co) et l'identité internationale (IMSI_Co) stockées en correspondance avec l'identifiant (IdS_Co) dudit service, et que le serveur de personnalisation (PS) envoie un message (MesP) au dispositif de communication (CD), le message (MesP) contenant la clé d'authentification (AK_Co), l'identité internationale (IMSI_Co), un code administrateur (ACps), l'identifiant (IdS_Co) dudit service et une commande de personnalisation (ComP), afin que la carte à puce (SC) interprète (S6) la commande de personnalisation (ComP) pour stocker la clé d'authentification (AK_Co), l'identité internationale (IMSI_Co) et l'identifiant (IdS_Co) dudit service si le code administrateur (ACps) est valide.
